# EUROPÄISCHE PATENTSCHRIFT

(11) **EP 1 522 915 B1**
(45) Veröffentlichungstag und Bekanntmachung des Hinweises auf die Patenterteilung: **09.08.2006**
(21) Anmeldenummer: 04015097.1
(22) Anmeldetag: 28.06.2004
(51) Int. Cl.: G06F 1/16

(54) **Vorrichtung zum Ankoppeln von Rechnern an einer Trägereinheit**
Device for coupling computers to a carrier unit
Dispositif pour coupler des ordinateurs à une unité de support

(30) Priorität: 21.08.2003 DE 10338320
(43) Veröffentlichungstag der Anmeldung: 13.04.2005
(73) Patentinhaber: Parat-Werk Schönenbach GmbH & Co. KG, 42897 Remscheid (DE)
(72) Erfinder: Pirchl Mathias, 7323 Wangs (CH); Mathis Franz, 6374 Buochs (CH); Pirchl Gerhard, 7323 Wangs (CH); Profunser Herbert, 6832 Zwischenwasser/Muntlix (AT)
(74) Vertreter: Riebling, Peter

(56) Entgegenhaltungen:
- EP-A- 1 016 951
- WO-A-01/77799
- US-A- 5 461 717
- US-A- 6 008 621

## Beschreibung

Mit dem Gegenstand der DE 100 43 995 A1 ist eine Vorrichtung bekannt geworden, die als Aufbewahrungsschrank für mobile Rechner mit automatischer Nachladung ausgebildet ist.

Der Aufbewahrungsschrank besteht aus einer Vielzahl von zeilen- und spaltenweise angeordneten Einschubfächern, wobei an der Rückwand des Schrankes pro Fach beispielsweise zwei Federkontakte für die Stromversorgung des dort einzuschiebenden Rechners angeordnet sind. Ein zentrales Netzteil oder Einzelnetzteile sind in einem Sockel- oder Zwischenraum des Aufbewahrungsschrankes angeordnet, um so die in den Aufbewahrungsschrank eingeschobenen Rechner zentral mit Strom zu versorgen.

Nachteil bei dem bekannten Aufbewahrungsschrank ist allerdings, dass die anzuschließenden Rechner per Hand eingeschoben werden müssen und die Kontaktierung an der Innen- und Rückseite des Schrankes nur ungenau erfolgt.

Die genannte Druckschrift offenbart nur einen Stromanschluss zur Aufladung der Rechner, was mit einfachen Mitteln erfüllbar ist. Geht es jedoch darum, komplizierte Steckverbindungen herzustellen, wie z. B. die Steckverbindung zwischen seriellen Steckern, Steckern der Bauart RJ11 oder 45, kommt es auf wenige Zehntel mm darauf an, die Anschlussseite des jeweiligen Rechners beschädigungsfrei in die zugeordnete Aufnahmesteckseite einzuführen.

Hierzu sieht die genannte Druckschrift DE 100 43 995 A1 keine Mittel vor.

Bei den modernen Rechnern kommt es häufig vor, dass die Anschlussseite nicht nur an der Rückseite des Rechners angeordnet ist, sondern zusätzlich an einer hierzu senkrechten Fläche, z. B. einer der Seitenflächen. Eine Möglichkeit, den Rechner an zwei senkrecht zueinander stehenden Anschlussseiten betriebssicher anzuschließen, wird in der genannten DE 100 43 995 A1 nicht offenbart.

Die US 5,461,717 A offenbart ein Verfahren und eine Vorrichtung zur Datenübertragung zwischen einem Hauptprozessor und mehreren tragbaren Rechnern, wobei hierfür die tragbaren Rechner in Aufnahmefächer der Vorrichtung einzeln eingeschoben werden und dadurch automatisch einzeln über Steckkontakte elektrisch kontaktiert werden.

Der Erfindung liegt deshalb die Aufgabe zugrunde, eine Vorrichtung zum Ankoppeln von Rechnern an einer Trägereinheit (z. B. einem Aufbewahrungsschrank) so weiterzubilden, dass ein betriebssicherer Anschluss des Rechners an zwei zueinander senkrecht stehenden Anschlussseiten möglich ist.

Zur Lösung der gestellten Aufgabe ist die Erfindung durch die technische Lehre des Anspruches 1 gekennzeichnet.

Wesentliches Merkmal der Erfindung ist, dass die Vorrichtung eine erste Ankopplungseinheit mit mindestens einer ersten Adapterplatte mit Steckaufnahmen und/oder Steckern beinhaltet, wobei die Vorrichtung zusätzlich eine zweite Ankopplungseinheit mit mindestens einer Adapterplatte mit Steckaufnahmen und/oder Steckern beinhaltet, und mindestens eine der beiden Ankopplungseinheiten relativ zur anderen Ankopplungseinheit derart bewegbar ist, dass nach zuvor erfolgter manueller Ankopplung der Rechner an eine der beiden Ankopplungseinheiten, automatisch die Kopplung zur anderen der beiden Ankopplungseinheiten erfolgt.

Insbesondere ist dabei die erste Ankopplungseinheit für die Rechner feststehend ausgebildet, und die zweite Ankopplungseinheit für die Rechner in einer relativ zur ersten Ankopplungseinheit verfahrbaren Schublade mit Aufnahmefächern für die Rechner angeordnet.

Ein wesentlicher Vorteil der Erfindung liegt nun darin, dass man mehrere Rechner in zwei zueinander senkrecht stehenden Steckrichtungen beschädigungsfrei mit zwei Ankopplungseinheiten in der Trägereinheit ankoppeln kann. Eine solche Ankopplung kann eine mechanische Ankopplung oder auch eine elektromechanische Ankopplung sein.

Dadurch, dass man an der Ankopplungseinheit eine verschiebbare Schublade anordnet, welche die Aufnahmefächer für die dort einzusteckenden Rechner bildet, ergibt sich der wesentliche Vorteil, dass man zunächst den Rechner (beispielsweise von oben nach unten) in die nach oben geöffneten Einsteckfächer der Schublade einsteckt und dort am Boden der Schublade mit dort angeordneten Adapterplatten eine erste Kontaktierung herstellt.

Sobald diese Kontaktierung hergestellt ist und alle Rechner in die nach oben geöffneten Einsteckfächer der Schublade eingesteckt sind, wird die ganze Schublade in Richtung ihrer Verschiebungsrichtung gegen die Ankopplungseinheit verschoben, so dass die senkrecht zur Bodenseite der Schublade angeordneten Anschlussseiten der einzelnen Rechner nun in der Gegenüberstellung zu der in der Ankopplungseinheit angeordneten Adapterplatten gelangen.

Mit weiterer Verschiebung der Schublade werden so die Anschlussseiten der Rechner nächst der Ankopplungseinheit mit den dort befestigten Adapterplatten und den zugeordneten Steckaufnahmen verbunden.

Damit ergibt sich der wesentliche Vorteil, dass die Schublade praktisch spielfrei und verkantungsfrei läuft und so eine Beschädigung der Anschlussseiten der Rechner und der zugeordneten Anschlussstecker in der Ankopplungseinheit mit Sicherheit vermieden wird.

Weiterer Vorteil dieser Maßnahme ist, dass man die gesamte Anordnung auch mechanisch, elektromagnetisch oder in anderer Weise mittels motorischem Antrieb verfahrbar antreiben kann, um so einen Schubladenantrieb vorzusehen, der selbsttätig arbeitet, um so die Ankopplung der Rechner in der Ankopplungseinheit automatisch durchzuführen.

Es bedarf daher keines Eingriffes von Hand mehr, um die Kopplung der Rechner in der feststehenden Ankopplungseinheit durchzuführen, was hierdurch besonders spielfrei und beschädigungsfrei erfolgen kann.

Insbesondere ist es vorteilhaft, wenn als Schubladenführung für die verschiebbare Schublade möglichst spielfreie Führungen verwendet werden, die auch verkantungsfrei arbeiten. Hierzu ist es in der Schubladentechnik bekannt, verkantungsfreie Schubladenführungen zu schaffen, bei denen beispielsweise die Verkantungsfreiheit dadurch erreicht wird, dass neben der einfachen Führungsschiene (Gleit- oder Rollführung) noch zusätzliche Maßnahmen gegen Verkantung durchgeführt werden. Solche Maßnahmen sind beispielsweise mit der Schublade verbundene Ritzel, die jeweils drehbar an den Schubladenseitenwänden angeordnet sind und die durch eine gemeinsame Verbindungswelle miteinander verbunden sind. Diese beiden Ritzel laufen in korpusseitig angeordneten Zahnstangen, um so eine verkantungsfreie Führung zu gewährleisten.

Selbstverständlich ist die Ausgestaltung nach der vorliegenden Erfindung nicht auf eine derartige Schubladenführung beschränkt: es werden sämtliche möglichen längsverschiebbaren Führungen beansprucht. Solche längsverschiebbaren Führungen sind beispielsweise auch Prismenführungen, Gleitführungen, Rollkörperführungen und dergleichen mehr.

Als Verschiebungsantrieb kann selbstverständlich auch ein Spindelantrieb verwendet werden.

Von besonderem Vorteil ist es, wenn man eine Schubladenführung mit einer sogenannten Einzugsautomatik verwendet. Eine solche Einzugsautomatik besteht aus einem Kraftspeicher (z. B. einer Feder, welche die Schublade in der Schließstellung hält. Damit ist der Vorteil verbunden, dass in der angekoppelten Stellung der Rechner an der Ankopplungseinheit die Schublade federbelastet in der Ankopplungsstellung gehalten wird und damit eine besonders betriebssichere Kontaktierung an der Ankopplungseinheit besteht.

Auch Erschütterungen oder unbeabsichtigtes Ziehen an der Schublade kann dann nicht ohne Weiteres zum Ausziehen der Schublade aus der Ankopplungseinheit führen.

In einer bevorzugten Ausgestaltung nach der Erfindung ist es vorgesehen, dass die Ankopplungseinheit in vertikaler Ebene ausgerichtete Adapterplatten trägt und die Schublade in horizontaler Ebene verschiebbar zur Ankopplungseinheit ausgebildet ist. Die Schublade bildet hierbei nach oben geöffnete Einsteckfächer aus, so dass die einzelnen Rechner von oben nach unten in die nach oben geöffneten Einsteckfächer eingesteckt werden und zunächst an der Bodenseite der Schublade mit den dort angeordneten Adapterplatten kontaktiert werden.

Erst mit dem Verschieben der Schublade in die Ankopplungseinheit in horizontale Richtung werden dann die Anschlüsse an der Ankopplungseinheit hergestellt.

In einer anderen Ausgestaltung der Erfindung ist es selbstverständlich auch möglich, dass man in kinematischer Umkehrung die Rechner von unten nach oben in eine Schublade einsteckt und die Schublade ebenfalls in horizontale Richtung verschiebt.

In einer anderen Ausgestaltung ist es vorgesehen, dass man die Rechner liegend in die nach vorne geöffneten Einsteckfächer einsteckt und zunächst die eine Anschlussseite des Rechners mit einer dortigen Einsteckrichtung angeordneten Adapterplatte kontaktiert.

Der Anschluss in senkrechte Richtung wird dann dadurch bewerkstelligt, dass man die dort (in senkrechte Richtung zur erst genannten Adapterplatte) angeordneten Adapterplatten mit dem vorher beschriebenen Verschiebeantrieb (manuell oder angetrieben) gegen die senkrecht hierzu gerichtete Anschlussseite des Rechners bewegt und so den Anschluss herstellt.

Bei diesem Ausführungsbeispiel ist also wichtig, dass nicht die Rechner gegen die Adapterplatten bewegt werden, sondern dass die Adapterplatten gegen den Rechner bewegt werden.

Selbstverständlich ist die Umkehrung (Bewegung des Rechners gegen die Adapterplatten) genauso möglich.

In der anderen Ausführungsform nach der Erfindung ist es vorgesehen, dass der Rechner wiederum liegend in ein nach vorn geöffnetes Einsteckfach eingeschoben wird und an seiner Rückseite mit einer dort angeordneten Adapterplatte kontaktiert wird, wobei aber nun ein oder mehrer Adapterplatten von unten bewegbar (manuell oder angetrieben) in die senkrecht hierzu gerichtete Anschlussseite des Rechners bewegt wird und hierdurch die Kontaktierung hergestellt wird.

Alle diese Ausführungsbeispiele werden vom Erfindungsgegenstand der vorliegenden Erfindung umfasst.

Es wird im Übrigen noch darauf hingewiesen, dass es nicht lösungsnotwendig ist, an beiden Anschlussseiten des Rechners elektrische Kontaktierungen herzustellen. Es kann in einer vereinfachten Ausgestaltung auch möglich sein, an der einen Anschlussseite nur eine mechanische Halterung des Rechners vorzusehen und die Kontaktierung nur an der hierzu senkrecht stehenden Richtung vorzunehmen.

Dies bedeutet, dass alle elektrischen Anschlüsse des Rechners beispielsweise nur an der Rückseite angeordnet sind und die entsprechende Adapterplatte in der vertikalen Ebene der feststehenden Ankopplungseinheit angeordnet ist, während die mechanische Ankopplung des Rechners in der Schublade nur an der Bodenseite der Schublade erfolgt, ohne dass dort eine elektrische Ankopplung erfolgt.

Ebenso kann an der Bodenseite der Schublade eine mechanische Zentrierung des Rechners vollständig entfallen, weil nach einer anderen Ausgestaltung der Erfindung auch seitliche Zentrierungen in der Schublade vorhanden sind. Diese seitlichen Zentrierungen werden später auch als "Rechen" bezeichnet, weil diese "Rechen" breitenverstellbar sind und so einstellbar sind, dass sie genau auf die Breite des dort einzusteckenden Rechners eingestellt werden können. Der Rechner wird somit in die einander gegenüberliegenden Rechen-Anordnungen spiel- und verkantungsfrei eingesteckt.

Die Erfindung ist nicht auf die Vielfacheinsteckung von einzelnen Rechnern an einer einzigen Ankopplungseinheit beschränkt. Es kann auch eine symmetrische Anordnung vorgesehen werden, so dass eine feststehende Ankopplungseinheit sowohl von der einen vertikalen Ebene als auch von der gegenüberliegenden (gespiegelten) vertikalen Ebene kontaktiert werden kann. An dieser Ankopplungseinheit sind dann einander entgegengesetzt gerichteten, verfahrbare Schubladen angeordnet. Jede der Schubladen bildet dann die nach oben geöffneten Einsteckfächer für die Aufnahme der Rechner.

In einer anderen Ausgestaltung der Erfindung ist es vorgesehen, dass statt der Schublade (n) auch eine schwenkbare Ankopplungseinheit verwendet wird, welche die gleiche Aufgabe mit ähnlichen Mitteln löst. Anstatt linear verschiebbare Schubladen zu verwenden, die zur Kontaktierung dienen, ist es in dieser Weiterbildung vorgesehen, dass eine um eine horizontale Achse schwenkbare Ankopplungseinheit vorhanden ist, die ebenfalls die Ankopplung an der entsprechenden Anschlussseite der anzusteckenden Rechner herstellt.

Es ist ferner noch ein mechanisches Zentralsystem zur Verriegelung aller Rechner in einem Aufbewahrungsgehäuse vorhanden. Dieses zentrale Verriegelungssystem besteht im Prinzip aus einem schwenkbaren Verriegelungsrahmen, der mit mehreren Bolzen ein oder mehrere Hauben verschließt, die verschiebbar über der Trägereinheit angeordnet sind und mit dem zusätzlich auch noch eine Schublade versperrt werden kann.

Schließlich ist die Erfindung auch darauf gerichtet, dass die gesamte Trägereinheit in einem Aufbewahrungssystem untergebracht ist, weil ein oder mehrere Trägereinheiten nach der Erfindung durch Hauben verschließbar sind und die Hauben teleskopierbar verschiebbar auf einem Grundträger angeordnet sind. Diese Hauben sind dann unter eine zentrale größere Haube einschiebbar, um so alle Rechner freizugeben.

Das vorher genannte zentrale Schließsystem ist deshalb in der Lage, die Verschiebung der Hauben zu arretieren, um die Rechner diebstahlsicher einzuschließen.

Ferner bezieht sich eine Ausgestaltung der Erfindung darauf, dass das gesamte Aufbewahrungssystem mit den vorher beschriebenen Hauben, welche die ein oder mehreren Trägereinheiten abdecken, auf einem Fahrgestell angeordnet ist, wobei dieses Fahrgestell in der einfachsten Ausführungsform aus vier Rollen besteht, so dass das gesamte Aufbewahrungssystem leicht verfahrbar ist.

In einer Weiterbildung kann es vorgesehen sein, dass das Fahrgestell auch angetrieben ist, wobei mindestens eine der Laufrollen mit einem Antriebsmotor gekoppelt ist.

In einer dritten Ausgestaltung kann es vorgesehen sein, dass das Aufbewahrungssystem treppensteigtauglich ist, d. h. es ist ein Fahrgestell vorhanden, welches die Überwindung von Treppen und anderen Höhen gestattet.

Im Folgenden wird die Erfindung anhand von mehrere Ausführungswege darstellende Zeichnungen näher erläutert. Hierbei gehen aus den Zeichnungen und ihrer Beschreibung weitere Merkmale und Vorteile der Erfindung hervor.

Es zeigen:
- Figur 1:: perspektivische Ansicht einer Trägereinheit in einer ersten Ausführungsform
- Figur 2:: die Seitenansicht der Trägereinheit in Pfeilrichtung II nach Figur 1
- Figur 3:: die Draufsicht auf die Trägereinheit in Pfeilrichtung III
- Figur 4:: die Draufsicht auf die linke Seite der Trägereinheit mit Darstellung weiterer Einzelheiten
- Figur 5:: eine zweite Ausführungsform einer Trägereinheit in perspektivischer Darstellung
- Figur 6:: Schnitt durch die Ausführung nach Figur 5
- Figur 7:: perspektivische Darstellung des mechanischen Zentralschließsystems
- Figur 8:: ein Schnitt durch die untere Seite des Aufbewahrungsgehäuses mit Darstellung des Schließsystems
- Figur 9:: perspektivische Darstellung eines Aufbewahrungsbehälters mit daran angeordneten Trägereinheiten in einer ersten Ausführungsform
- Figur 10:: perspektivische Darstellung eines Fahrgestells
- Figur 11:: eine zweite Ausführungsform des Aufbewahrungssystems mit einem treppensteigtauglichen Fahrgestell
- Figur 12:: die Frontansicht der Anordnung nach Figur 11
- Figur 13:: schematisiert die Bewegungsabläufe bei der Herstellung der Anschlüsse nach dem System der Figuren 1 bis 4
- Figur 14:: ein gegenüber Figur 13 abgewandelter Bewegungsablauf
- Figur 15:: ein gegenüber Figur 13 oder 14 weiter abgewandelter Bewegungsablauf zur Herstellung der Kontaktierungen

Der hier verwendete Begriff der "Kontaktierung" ist nicht auf eine elektrische Kontaktierung beschränkt. Hierunter werden auch mechanische Verbindungsmittel verstanden. So liegt es beispielsweise im Rahmen der Erfindung, lediglich an einer Seite des Rechners 6, 7 entsprechende elektrische Kontaktierungen herzustellen, während an der hierzu senkrechten Richtung nur mechanische Zentrierungen oder Verbindungsmittel angeschlossen werden.

Ebenso liegt es im Schutzbereich der Erfindung, dass an beiden senkrecht zueinander stehenden Richtungen der Rechner 6, 7 mechanische und/oder elektrische Kontaktierungen hergestellt werden.

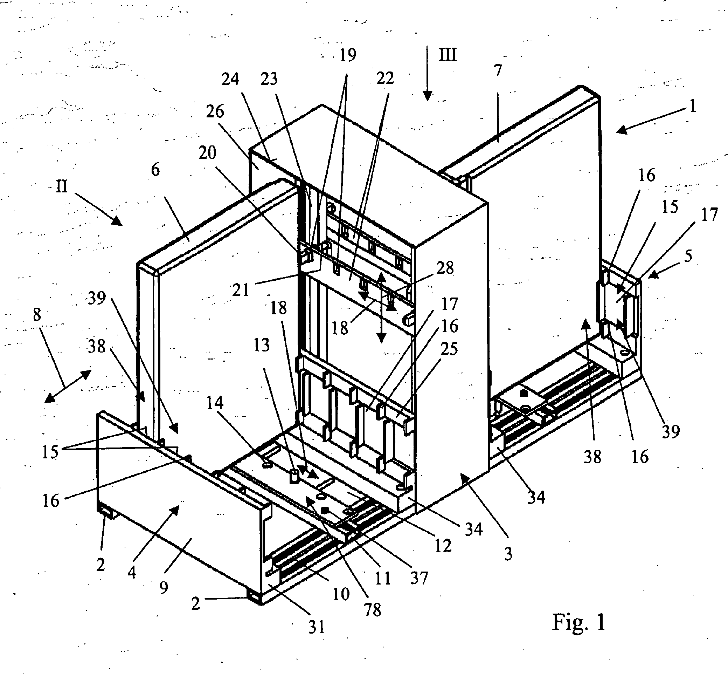

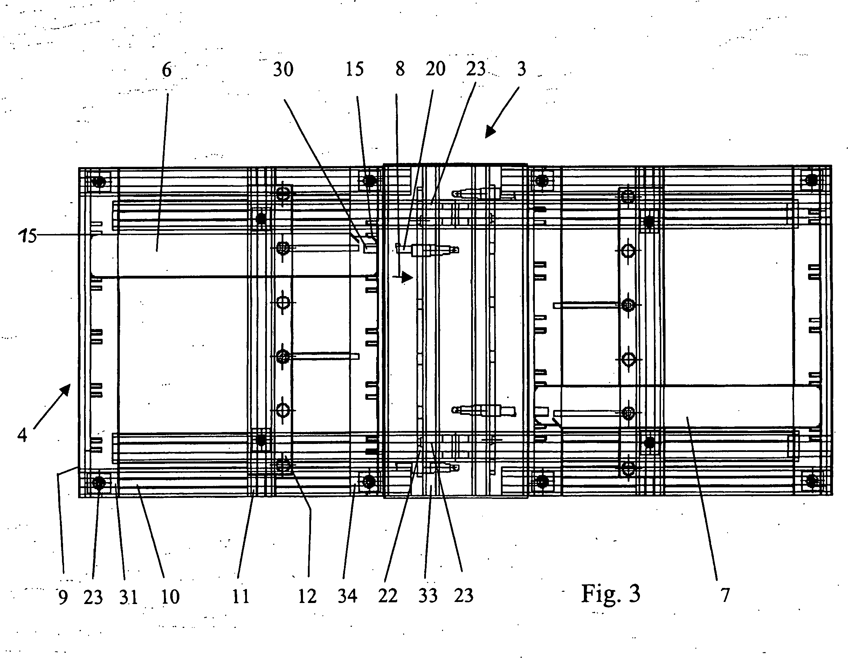

Im gezeigten Ausführungsbeispiel nach Figur 1 bis 4 besteht die Trägereinheit 1 aus einer mittleren ersten Ankopplungseinheit 3, die fest auf in horizontaler Ebene parallel zueinander angeordneten Profilträgern 2 befestigt ist.

Verschiebbar zu der ersten Ankopplungseinheit 3 in den Pfeilrichtungen 8 ist jeweils auf jeder Seite der ersten Ankopplungseinheit 3 eine Schublade 4, 5 angeordnet, die nach oben geöffnete Einsteckfächer 38, 39 bildet.

Es werden eine Vielzahl von Rechnern 6, 7 in die nach oben geöffneten Einsteckfächer der Schubladen 4, 5 eingesteckt, wobei der Vereinfachung wegen nur jeweils ein Rechner 6 und ein Rechner 7 auf jeder Schublade 4, 5 gezeigt ist.

Die Schubladen 4, 5 sind in der ausgezogenen Stellung dargestellt, d. h. die hinteren Anschlussseiten der Rechner 6, 7 sind noch nicht mit den zugeordneten Anschlussseiten in der ersten Ankopplungseinheit 3 elektrisch oder mechanisch verbunden.

Nachdem die beiden Schubladen und Aufbewahrungseinheiten genau spiegelsymmetrisch zur ersten Ankopplungseinheit 3 nach Figur 1 ausgebildet sind, genügt es für die weitere Beschreibung, lediglich eine Seite der Schublade 4, 5 zu beschreiben, weil die andere Seite genau identisch ausgebildet ist.

Aus Übersichtlichkeitsgründen wurden teilweise auch Teile der gegenüberliegenden Schubladeneinheit bezeichnet, weil die Teile genau gleich ausgebildet sind.

Jede Schublade 4, 5 besteht aus einer Frontplatte 9, die werkstoffeinstückig oder zweiteilig mit einem querverlaufenden Träger 31 verbunden ist, der wiederum fest auf einer verschiebbar gelagerten Schubladenschiene 10 befestigt ist. Die Schubladenschienen 10 sind parallel verschiebbar zueinander in den zugeordneten Profilträgern 2 verschiebbar gelagert, wobei beliebige Schubladenführungen verwendet werden können. Es können Gleitführungen, Rollenführungen, Zylinderführungen oder auch Laufwagenführungen verwendet werden. Ebenso kann es vorgesehen sein, die Schubladenführung als Teleskopschiene auszubilden.

Es werden allerdings nur Auszugslängen im Bereich von etwa 100 mm benötigt, was zu einer besonders einfachen Schubladenführung führt.

Wichtig ist, dass am Boden der Schublade 4, 5 ein oder mehrere Querträger 11 angeordnet sind und auf jedem Querträger verschiebbar und feststellbar jeweils eine zweite Ankopplungseinheit 78 mit Adapterplatte 12 angeordnet ist. Die Befestigung erfolgt hierbei beispielsweise mit Befestigungsschrauben 37, die in der als C-Profil ausgebildeten Querträger 11 verschiebbar und feststellbar ausgebildet sind, so dass die jeweilige Adapterplatte 12 in den Pfeilrichtungen 18 verschiebbar und feststellbar auf den Querträger 11 angeordnet ist.

Ebenso kann der Querträger 11 auf der Schubladenschiene 10 verschoben und festgelegt werden, was wiederum über die Befestigungsschraube 37 erfolgt.

Auf diese Weise ist es bei geöffneter Schublade ohne Weiteres möglich, zur erstmaligen Einstellung zunächst die Adapterplatte 12 auf dem Querträger 11 so einzustellen, dass die darauf angeordneten Stecker 13 und Steckaufnahmen 14 genau der zugeordneten Anschlussseite des dort einzusteckenden Rechners 6 zugeordnet sind.

Um eine möglichst verkantungsfreie Führung im Bereich der nach oben geöffneten Einsteckfächer zu gewährleisten, ist es vorgesehen, dass in der Breite anpassbare Einsteckfächer vorgesehen sind. Dies wird dadurch erreicht, dass einander gegenüberliegende feststehende Trennleisten 16 vorgesehen sind, die einen größeren Abstand aufweisen als vergleichsweise die Breite des dort einzusteckenden Rechners 6.

Verschiebbar zu den feststehenden Trennleisten 16 sind hierbei zusätzliche bewegbare Halterungen 17 vorgesehen, die in horizontaler Richtung verschiebbar sind, um so einen feststehenden Rechen gegen einen bewegbaren Rechen zu verschieben und hierdurch dazwischen liegende Einschubfächer zu bilden, die genau der Breite des einzuschiebenden Rechners 6, 7 angepasst sind. Auf diese Weise kann jeder Rechner 6, 7 in das nach oben geöffnete Einsteckfach 38, 39 verkantungsfrei und spielfrei von oben her eingeschoben werden.

Die gegeneinander verschiebbaren Rechen 16, 17 bilden also nach oben geöffnete Führungsaufnahmen 15, die in ihrer Breite an die Breite des einzusteckenden Rechners 6, 7 angepasst sind.

Wichtig ist nun, dass nach dem Einstecken der Rechner 6, 7 (bei vollständig geöffneten Schubladen 4, 5) jede der Schubladen dann in Pfeilrichtung 8 in Richtung auf die erste Ankopplungseinheit 3 verfahren wird und nun die in senkrechter Richtung an der Rückseite der Rechner 6, 7 angeordneten Anschlussseiten in elektrischen und/oder mechanischen Verbindungskontakt mit den in der ersten Ankopplungseinheit 3 angeordneten Anschlusselementen gebracht wird.

Die Anschlusselemente in der ersten Ankopplungseinheit bestehen im Wesentlichen aus vertikal und parallel im Abstand zueinander angeordneten Führungsschienen 23, die nach vorne offene Profilkanäle ausbilden, in denen horizontal gerichtete Adapterplatten 22 verschiebbar und feststellbar gelagert sind.

Im Ausführungsbeispiel nach Figur 1 ist eine vordere Adapterplatte 22 für die Ankopplung an den Rechner 6 vorgesehen und eine hintere Adapterplatte 22 für die Ankopplung der Anschlussseite des Rechners 7.

In jeder Adapterplatte 22 sind wiederum Steckaufnahmen 19 und Stecker 20 angeordnet, die mit den zugeordneten Steckern 30 an der Rückseite der Rechner 6, 7 verbindbar sind.

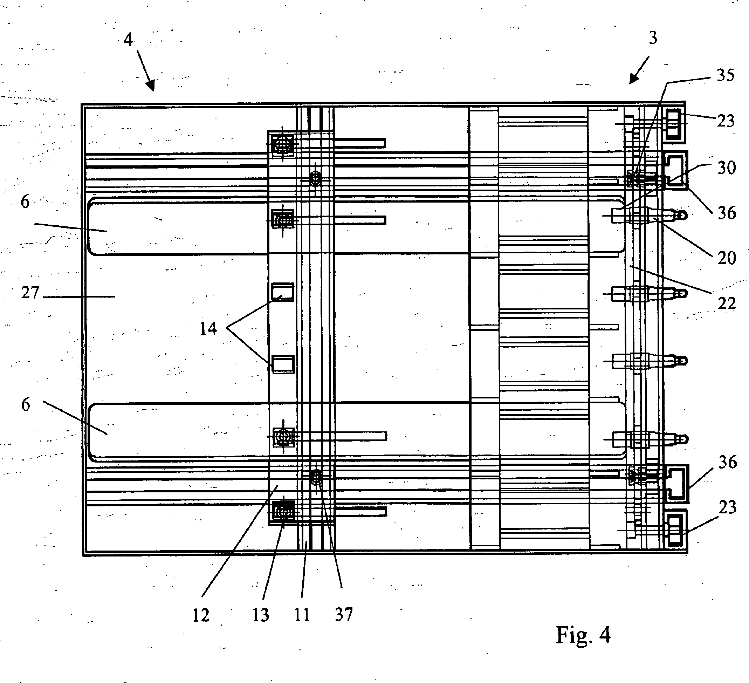

Wichtig ist, dass die Adapterplatte 22 in den Pfeilrichtungen 18, 28 verschiebbar und feststellbar auf den zugeordneten Führungsschienen 23 gelagert sind, wobei gemäß Figur 4 die linke Seite der Trägereinheit 1 näher dargestellt ist. Hieraus ist entnehmbar, dass in zwei zueinander parallelen Befestigungsschienen 36 Feststellführungen angeordnet sind, in denen die Adapterplatte 22 gehalten ist.

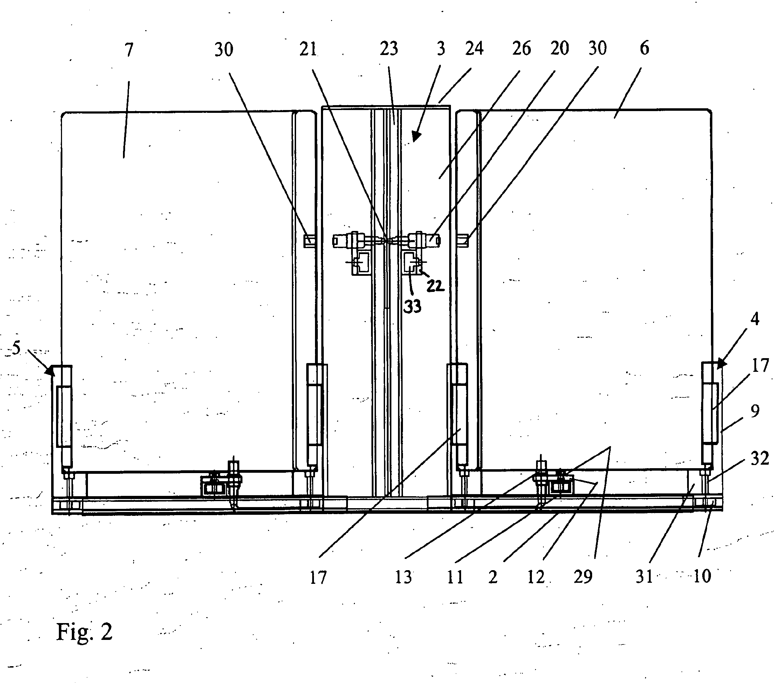

Eine gleiche Feststellführung ist beispielsweise auch in Figur 2 für die Bodenseite des jeweiligen Rechners 6, 7 dargestellt, wo erkennbar ist, dass eine Befestigungsschraube 29 für die genannte Verstellführung vorhanden ist, um die dort gezeigte Adapterplatte 12 in der Anschlussstellung genau zu positionieren und festzulegen.

Die Abführung der elektrischen Signale kann im Übrigen durch Kabel 21 erfolgen.

Um zu vermeiden, dass die Rechner 6, 7 in der eingeschobenen Lage der Schubladen 4, 5 in die nach oben geöffneten Einsteckfächer 38, 39 eingesteckt werden können (wobei die Kopplungseinheiten in der ersten Ankopplungseinheit 3 beschädigt werden könnten) ist es vorgesehen, dass die erste Ankopplungseinheit 3 jeweils nach vorne die Anschlussseite überragend einen überragenden Schutzrand 24 aufweist, so dass die Kontaktierung der vertikal gerichteten Anschlussseite der Rechner 6, 7 an der ersten Ankopplungseinheit 3 nur dann erfolgen kann, wenn die Rechner 6, 7 in Pfeilrichtung 8 gegen die erste Ankopplungseinheit 3 verfahren werden. Die erste Ankopplungseinheit bildet also eine in Richtung auf die Schubladen 4, 5 geöffnete Aufnahmeöffnung 26.

Die vorher auf Seiten der Schublade 4, 5 beschriebenen Führungsaufnahmen 15 mit den zwei gegeneinander verstellbaren Rechen ist im Übrigen auch in der Führungsaufnahme 25 in der ersten Ankopplungseinheit 3 verwirklicht.

Nach Figur 4 weist die Schublade 4, 5 im Übrigen auch noch eine Bodenplatte 27 auf.

Der Träger 31, welcher die Frontplatte 9 trägt, ist im Übrigen mittels Befestigungsschrauben 32 auf dem Profilträger 2 befestigt.

Die in der ersten Ankopplungseinheit 3 angeordneten Adapterplatten 22 sind im Übrigen auf querverlaufenden Führungsschienen 33 verschiebbar und feststellbar gelagert.

Die von Seiten der ersten Ankopplungseinheit befestigte Aufnahmeöffnung für das Einschieben der Rechner ist im Übrigen im Bereich eines Tragbalkens 34 ausgebildet.

In Figur 4 ist die vorher erwähnte Feststellführung 35 dargestellt, mit der es möglich ist, die in der ersten Ankopplungseinheit 3 angeordnete Adapterplatte 22 in zwei zueinander senkrechten Richtungen zu verschieben und festzustellen.

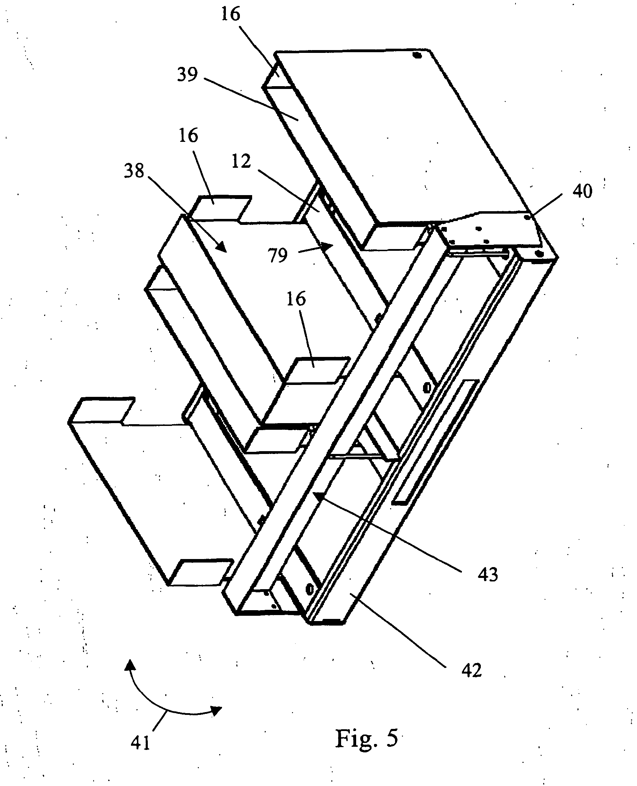

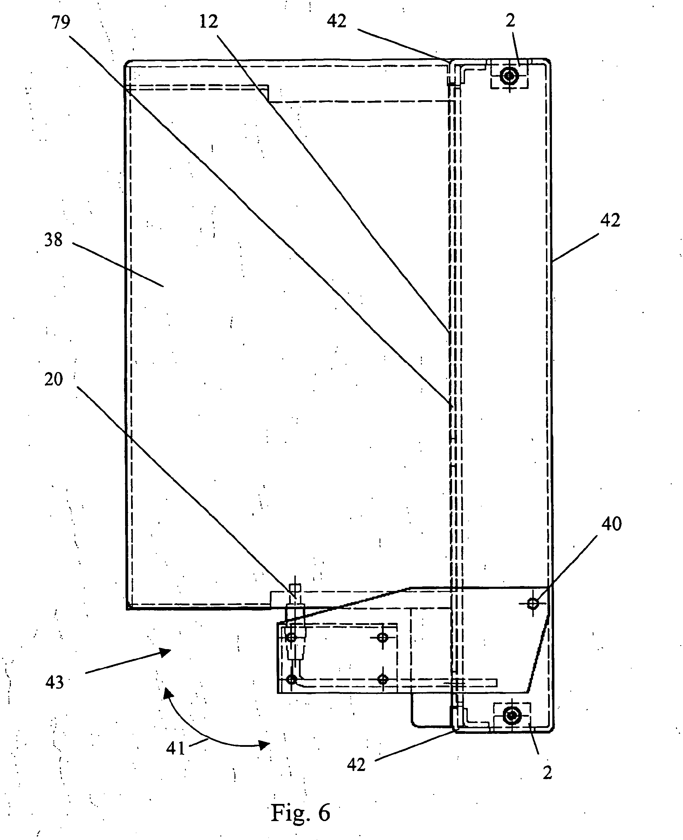

In einer anderen Ausgestaltung der Erfindung ist es vorgesehen, dass die erste Ankopplungseinheit in der Trägereinheit schwenkbar ausgebildet ist. Hierzu wird auf die Figuren 5 und 6 verwiesen.

Es werden wiederum Einsteckfächer 38, 39 gebildet, in welche einzelne Rechner 6, 7 eingesteckt werden können.

An der Bodenseite sind wiederum ein oder mehrere Adapterplatten 12 der zweiten Ankoppeleinheit 79 befestigt, wo die gleiche elektrische/mechanische Verbindung hergestellt werden kann, wie es anhand des Ausführungsbeispieles nach den Figuren 1 bis 4 mit der zweiten Ankoppeleinheit 78 beschrieben wurde.

Wichtig bei dieser Ausführungsform ist, dass auf Seiten der bodenseitigen Adapterplatte 12 nun eine erste Anschlussmöglichkeit an die dort einzusteckenden Rechner 6, 7 erfolgt und dass senkrecht hierzu eine erste Ankopplungseinheit 43 verschwenkbar in Pfeilrichtung 41 gelagert ist, in deren Bereich eine Adapterplatte 22 (nicht dargestellt) angeordnet ist. Für die Lagerung der dortigen Adapterplatte 22 gelten die gleichen Erläuterungen wie anhand der Figur 1 bis 4 gegeben wurden.

Die genannte erste Ankopplungseinheit 43 ist in einem horizontalen Schwenklager 40 in den Pfeilrichtungen 41 schwenkbar und dieses horizontale Schwenklager ist im Bereich einer Trägerplatte 42 ausgebildet.

Beide Trägereinheiten nach den Figuren 1 bis 4 bzw. nach Figur 5 und 6 werden durch eine haubenartige Anordnung abgeschlossen, so dass insgesamt hierdurch ein Aufbewahrungsbehälter verwirklicht wird.

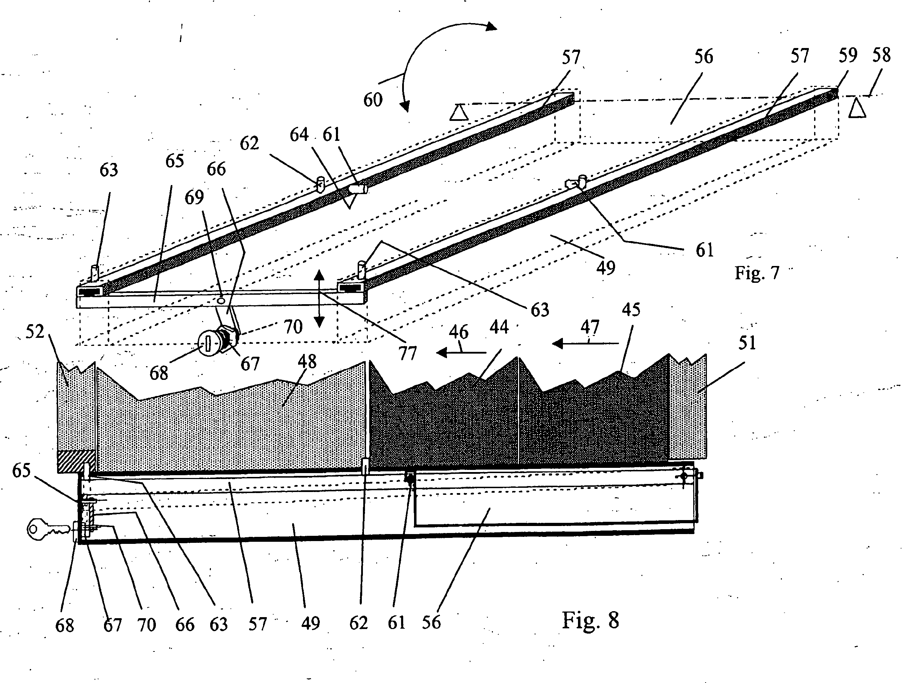

Anhand der Figuren 7 und 8 wird nun ein zentrales Schließsystem für den Verschluss des Aufbewahrungsbehälters mit den erfindungsgemäßen Trägereinheiten näher erläutert.

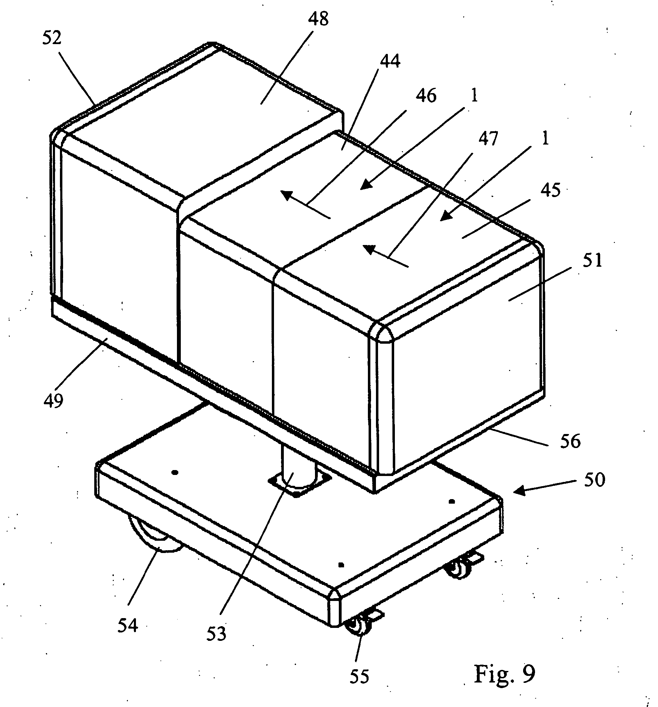

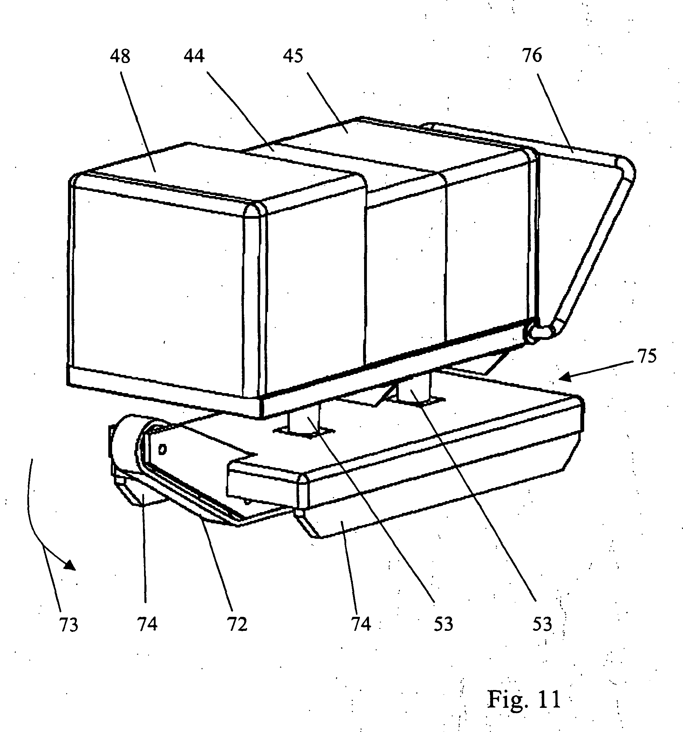

Zur Erläuterung wird zunächst auf das Haubensystem hingewiesen, welches beispielsweise in den Figuren 9 und 11 dargestellt ist. Hier ist erkennbar, dass beispielsweise zwei Trägereinheiten 1 entweder nach dem Ausführungsbeispiel nach den Figuren 1 bis 4 oder nach dem Ausführungsbeispiel nach den Figuren 5 und 6 unter jeweils zwei verschieden und getrennt voneinander verfahrbaren Hauben 44, 45 angeordnet sind und beide Hauben gemäß Figuren 9 in Pfeilrichtung 46 bzw. 47 unter eine zentrale, feststehende und größer ausgebildete Haube 48 verschiebbar sind.

In der geöffneten Stellung ist somit zunächst die Haube 44 in Pfeilrichtung 46 unter die größere Haube 48 verschoben, wodurch die dort unter der Haube angeordneten und nach oben gerichteten Einsteckfächer zugänglich werden und hierbei eine Reihe von Rechnern 6, 7 in die dort angeordneten Trägereinheiten 1 eingesteckt werden können.

Nach der Bestückung der Trägereinheit unter der Haube 44 wird die Haube 45 in Pfeilrichtung 47 an die Stelle der Haube 44 nach links verschoben, so dass die nach oben geöffneten Einsteckfächer unter der Haube 45 frei zugänglich werden. Es werden dann die Rechner in die dort jetzt zugängliche Trägereinheit 1 eingesteckt und diese wird damit bestückt.

Die Abschlusshaube 51 ist fest mit dem Grundträger 49 verbunden. Ebenso ist die Haube 48 fest mit dem Grundträger 49 verbunden.

An der linken Seite der Haube 48 ist ein Deckel 52 angeordnet, der zu öffnen ist. An der rechten Seite ist eine Schublade 56 vorgesehen, in der zusätzliche Gegenstände untergebracht werden können.

Der gesamte Aufbewahrungsbehälter ist mit mindestens einem Stützfuß 53 auf einem Fahrgestell 50 gelagert, wobei dieser Stützfuß 53 gegebenenfalls noch höhenverstellbar und/oder drehbar ausgebildet ist.

Anstelle eines einzigen Stützfußes 53 können selbstverständlich auch mehrere Stützfüße oder eine andere Verbindung zwischen einem Grundträger eines Aufbewahrungsbehälters und einem darunter angeordneten Fahrgestell 50 vorgenommen werden.

Das Fahrgestell in seiner einfachsten Ausführungsform weist mindestens zwei Laufrollen 54 auf, denen entsprechend lenkbare Laufrollen 55 gegenüberliegen.

Zur Erläuterung des Haubensystems ist es nun möglich, das zentrale Schließsystem anhand der Figuren 7 und 8 näher zu erläutern.

Das zentrale Schließsystem besteht im Wesentlichen aus zwei parallel zueinander angeordneten Längsschienen 57, die in ihrem hinteren freien Ende in einer **gemeinsamen Schwenkachse 58 schwenkbar - beispielsweise am Grundträger 49 - gelagert sind. Die Verschwenkung erfolgt hierbei in den Pfeilrichtungen 60.**

Auf jeder Längsschiene 57 sind eine Reihe von Verriegelungsbolzen 61-63 angeordnet, wobei die nach oben gerichteten Verriegelungsbolzen 62 zum Verschluss der Hauben 44, 45 als Verschiebungssicherung dienen, während die nach innen gerichteten Verriegelungsbolzen 61 zum Verschluss der Schublade 56 dienen. Mit den weiteren Verriegelungsbolzen 63 kann der Deckel 52 gegen Öffnen gesichert werden.

Das zentrale Sperrsystem besteht nun darin, dass im Bereich des Grundträgers 49 ein Drehzylinder 67 mit einem Schloss 68 angeordnet ist und der Drehzylinder 67 in der Drehachse 70 mittels eines Schlüssels verdrehbar ist. Mit der Drehung des Drehzylinders 67 wird ein Kniehebel 66 verschwenkt, der in einer Drehachse 69 in einem Querträger 65 drehbar gelagert ist und der Querträger fest mit den beiden Längsschienen 57 verbunden ist.

Durch Drehung des Drehzylinders 67 werden somit die beiden Längsschienen 57 mit dem Querträger 65 um das Schwenklager 59 verschwenkt und in Pfeilrichtung 77 angehoben oder abgesenkt.

In der angehobenen Stellung greifen somit die vorher genannten Verriegelungsbolzen in die zugeordneten Verriegelungsausnehmungen der gegenüberliegenden Teile ein und es ist somit ein zentrales Schließsystem sowohl für die Schublade als auch für die Hauben 44, 45 und den Deckel 52 gegeben.

Der der Schublade 56 zugeordnete Verriegelungsbolzen 61 greift hierbei in eine zugeordnete Nut 64 in der Schublade ein.

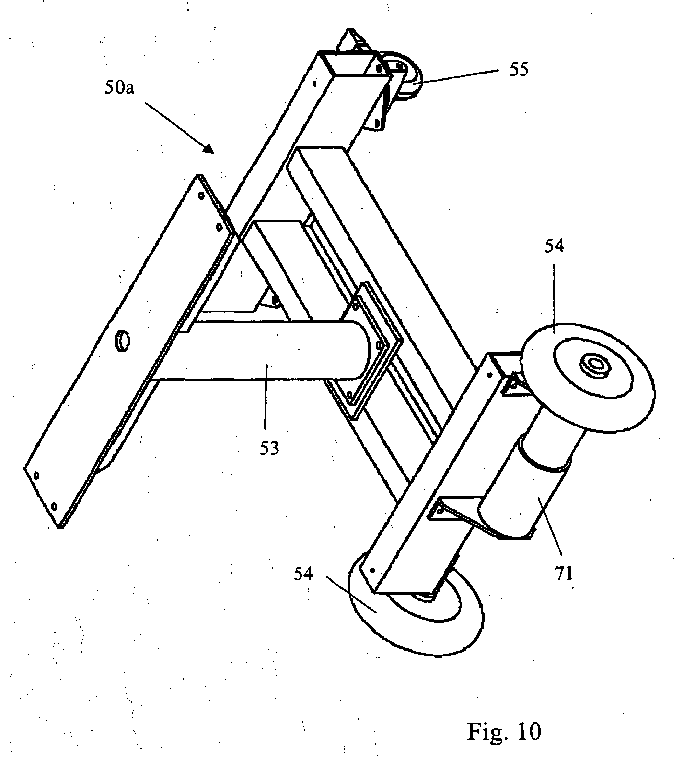

Die Figur 10 zeigt als abgewandeltes Ausführungsbeispiel für ein Fahrgestell 50a, dass eines der Laufrollen 54 auch über einen Getriebemotor 71 angetrieben sein kann.

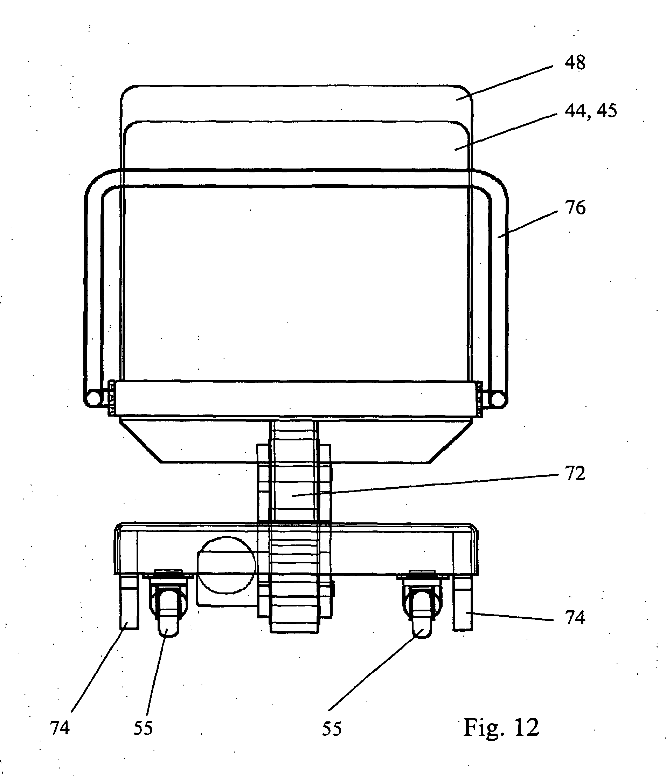

Die Figuren 11 und 12 zeigen eine treppensteigtaugliche Variante des gesamten Aufbewahrungssystems, wo erkennbar ist, dass ein Fahrgestell 75 seitliche Gleitschienen 74 aufweist und dazwischen ein Antriebskörper angeordnet ist, der im Wesentlichen aus einem in Pfeilrichtung 73 und in Gegenrichtung hierzu antreibbaren Antriebsband 72 besteht, wobei dieses Antriebsband gemäß Figur 12 entsprechende Vorsprünge, Noppen oder Rippen hat, um so an einer höhenversetzten Kante anzugreifen und das gesamte Fahrgestell 75 über diese Kante hinauf zu befördern.

Auf diese Weise kann das gesamte Aufbewahrungssystem eine Treppe besteigen oder von dieser Treppe herabgefahren werden.

Der Vollständigkeit halber soll noch erwähnt werden, dass an der Rückseite des Aufbewahrungssystems jeweils ein Handgriff 76 angeordnet ist, an dem ein oder mehrere Bedienungskonsolen für die elektrischen Antriebe und dergleichen vorgesehen werden können.

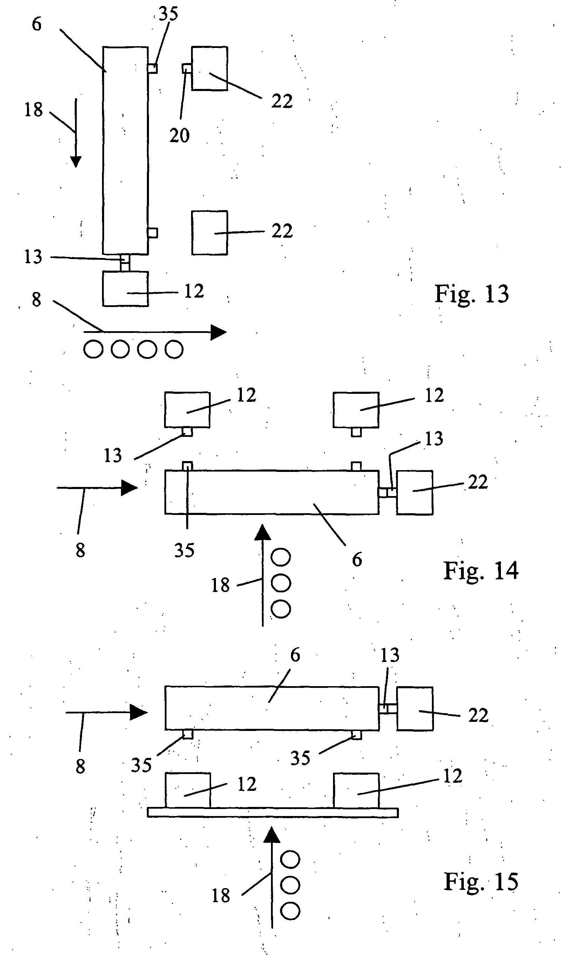

Die Figuren 13 bis 15 zeigen die verschiedenen Bewegungsarten bei der Ausbildung der Kopplungseinrichtungen, wobei die schematisierte Darstellung nach Figur 13 dem Ausführungsbeispiel nach Figur 1 bis 4 entspricht.

Die Figuren 14 und 15 zeigen jedoch in Weiterbildung dieses Ausführungsbeispieles, dass es auch möglich ist, die Rechner 6, 7 liegend einzuschieben und statt einer aktiven Bewegung der Rechner gegen eine entsprechende Ankopplungseinheit nun stattdessen die Ankopplungseinheit mit Adapterschienen 12 gegen die Rechner zu bewegen (was Figur 15 zeigt) oder die Rechner 6, 7 in Pfeilrichtung 18 gegen die feststehenden Adapterplatten 12 zu bewegen, was die Figur 14 zeigt.

Wesentlich bei dem erfindungsgemäßen Einschubsystem für Rechner ist dem gemäß, dass außerordentlich schwierig herzustellende, elektrische Verbindungen besonders betriebssicher hergestellt werden können, so dass auch empfindliche Kontaktierungen betriebssicher und beschädigungsfrei hergestellt werden können.

Wird beispielsweise eine Kopplung mit RJ45-Steckern vorgenommen, dann bedeutet dies, dass die dort eingeschobenen Rechner über eine betriebsfähige Verbindung mit einem Zentralrechner gekoppelt werden und entsprechende Daten übernehmen, Daten kopieren, einen Datenaustausch vornehmen oder andere Rechenoperationen ausführen.

Ebenso ist es möglich, dass alle Rechner, die in dem Aufbewahrungsbehälter seriell und parallel angeordnet sind, betriebsfähig untereinander kommunizieren oder betriebsfähig mit einer zentralen Instanz kommunizieren. Die zentrale Instanz muss nicht notwendigerweise im Aufbewahrungsbehälter selbst angeordnet werden, sondern sie kann auch über eine Funkübertragung oder über eine Kabelverbindung außerhalb des Aufbewahrungsbehälters angeordnet werden.

Sinn der Maßnahmen ist, einen zentralen Support und gegebenenfalls einen Datenaustausch mit allen Rechnern vorzunehmen, ohne diese aus dem Aufbewahrungsbehälter herausnehmen zu müssen.

Damit ergeben sich wesentliche Arbeitsvereinfachungen, denn wenn derartige Rechner als Teil eines Lernsystems verwendet werden, ist jeder Rechner auf dem neuesten Software-Stand, wenn der Rechner aus der Aufbewahrungseinheit herausgezogen und dem entsprechenden Schüler zur weiteren Bearbeitung übergeben wird.

Es ist im Übrigen vorgesehen, dass im feststehenden Teil des Aufbewahrungsbehälters ein oder mehrere Lüfter oder andere Kühlungssysteme angeordnet sind, mindestens eine zentrale Stromversorgung, ein oder mehre Drucker, Beamer, drahtlose Funkverbindungen und dergleichen mehr angeordnet sind.

Es werden selbstverständlich auch multimediale Komponenten vorgesehen, wie z. B. Audiogeräte, Videogeräte, digitale Kameras, CD-Spieler und dergleichen mehr.

Wichtig ist, dass mit dem gesamten System ein multimediales Lernsystem vorgesehen werden kann, was sehr einfach zu warten ist, welches nicht auf bestimmte Rechnertypen abgestellt werden kann, denn Dank der absolut modularen Anpassbarkeit der einzelnen Adapterplatten an die zugeordneten Rechner ist es möglich, unterschiedliche Rechnertypen in ein und demselben Aufbewahrungsgehäuse anzuordnen.

Beispielsweise können auf der linken Seite der Trägereinheit 1 im Bereich der Schublade 4 eine bestimmte Art von Rechnern eingeschoben werden, die vollständig andere Anschlussbedingungen haben als beispielsweise für Rechner 7, die im Bereich der Schublade 5 eingeschoben werden.

Die dort in senkrechten Richtungen zueinander angeordneten Adapterplatten 12, 22 erlauben eine vollständig freie Einstellung der dort zugeordneten Stecker und Steckeraufnahmen auf die zugeordneten Anschlussseiten der dort einzusteckenden Rechner 6, 7.

Es ist sogar möglich, einzelne Aufnahmefächer im Bereich einer einzigen Aufnahmeeinheit (z. B. der Schublade 4) auf spezielle Rechnertypen abzustellen, weil im Bereich der Adapterplatten auch eine Verschiebung der dort angeordneten Stecker und mechanischen Verbindungsmittel vorgesehen ist.

Hierbei wird es bevorzugt, wenn die Halterungen der Stecker und der Steckaufnahmen in den Adapterplatten 12, 22 schwimmend ausgebildet sind. Eine derartige schwimmende Lagerung kann dadurch erfolgen, dass die genannten Komponenten in Ausnehmungen der Adapterplatten 12, 22 eingegossen sind, und zwar mit einem elastomeren Vergussmaterial, so dass sie in gewisser Weise federnd sich dem Anschlussdruck anpassen, wenn ein entsprechend rechnerseitig angeordneter Anschlussstecker diese Anschlusseinheit kontaktiert.

### Zeichnungslegende

- 1: Trägereinheit
- 2: Profilträger
- 3: Erste Ankopplungseinheit zu 78
- 4: Schublade
- 5: Schublade
- 6: Rechner
- 7: Rechner
- 8: Pfeilrichtung
- 9: Frontplatte
- 10: Schubladenschiene
- 11: Querträger
- 12: Adapterplatte
- 13: Stecker
- 14: Steckaufnahme
- 15: Führungsaufnahme
- 16: Trennleiste
- 17: Halterung (beweglich)
- 18: Pfeilrichtung
- 19: Steckaufnahme
- 20: Stecker (Anschlussseite)
- 21: Kabel
- 22: Adapterplatte
- 23: Führungsschiene (längs)
- 24: Schutzrand
- 25: Führungsaufnahme
- 26: Aufnahmeöffnung
- 27: Bodenplatte
- 28: Pfeilrichtung
- 29: Befestigungsschraube
- 30: Stecker (Rechner)
- 31: Träger
- 32: Befestigungsschraube
- 33: Führungsschiene (quer)
- 34: Tragbalken
- 35: Feststellführung
- 36: Befestigungsschiene
- 37: Befestigungsschraube
- 38: Einsteckfach
- 39: Einsteckfach
- 40: Schwenklager
- 41: Pfeilrichtung
- 42: Trägerplatte
- 43: Erste Ankopplungseinheit zu 79
- 44: Haube
- 45: Haube
- 46: Pfeilrichtung
- 47: Pfeilrichtung
- 48: Haube
- 49: Grundträger
- 50: Fahrgestell 50a
- 51: Abschlusshaube
- 52: Deckel
- 53: Stützfuß
- 54: Laufrolle
- 55: Laufrolle
- 56: Schublade
- 57: Längsschiene
- 58: Schwenkachse
- 59: Schwenklager
- 60: Pfeilrichtung
- 61: Verriegelungsbolzen
- 62: Verriegelungsbolzen
- 63: Verriegelungsbolzen
- 64: Nut (Schublade)
- 65: Querträger
- 66: Kniehebel
- 67: Drehzylinder
- 68: Schloss
- 69: Drehachse
- 70: Drehachse
- 71: Getriebemotor
- 72: Antriebsband
- 73: Pfeilrichtung
- 74: Gleitschiene
- 75: Fahrgestell
- 76: Handgriff
- 77: Pfeilrichtung
- 78: Zweite Ankopplungseinheit zu 3
- 79: Zweite Ankopplungseinheit zu 43

## Patentansprüche

1. Vorrichtung zum Ankoppeln von Rechnern (6, 7) an einer Trägereinheit (1) mit einer Vielzahl von Aufnahmefächern (38, 39) für die Rechner (6, 7), wobei die Vorrichtung eine erste Ankopplungseinheit (3; 43) mit mindestens einer ersten Adapterplatte (22) mit Steckaufnahmen (19) und/oder Steckern (20) beinhaltet, **dadurch gekennzeichnet, dass** die Vorrichtung zusätzlich eine zweite Ankopplungseinheit (78; 79) mit mindestens einer Adapterplatte (12) mit Steckaufnahmen (14) und/oder Steckern (13) beinhaltet, und mindestens eine der beiden Ankopplungseinheiten (3, 78; 43, 79) relativ zur anderen Ankopplungseinheit (78, 3; 79, 43) derart bewegbar ist, dass nach zuvor erfolgter manueller Ankopplung der Rechner (6, 7) an eine der beiden Ankopplungseinheiten (3, 78; 43, 79), automatisch die Kopplung zur anderen der beiden Ankopplungseinheiten (78, 3; 79, 43) derart erfolgt, dass nach vollständiger Kopplung der Rechner (6, 7) an die Vorrichtung, die Steckrichtungen der Steckaufnahmen (14; 19) und/oder Stecker (13; 20) der Ankopplungseinheiten (3, 78; 43, 79) zueinander in senkrechter Richtung liegen.

2. Vorrichtung nach Anspruch 1, **dadurch gekennzeichnet, dass** die erste (3; 43) und die zweite Ankopplungseinheit (78; 79) eine mechanische und elektrische Kopplung der Rechner (6, 7) an der Trägereinheit (1) bewirken oder aber eine der Ankopplungseinheiten (3, 43; 78, 79) eine mechanische und elektrische Kopplung und die andere Ankopplungseinheit (78, 79; 3, 43) nur eine mechanische Kopplung der Rechner (6, 7) an der Trägereinheit (1) bewirken.

3. Vorrichtung nach Anspruch 2, **dadurch gekennzeichnet, dass** durch die Vorrichtung die Rechner (6, 7) über mindestens eine der beiden Ankopplungseinheiten (3, 78; 43, 79) untereinander und/oder mit einem Zentralrechner zum Austausch von Daten verbunden werden.

4. Vorrichtung nach einem oder mehreren der Ansprüche 1 bis 3, **dadurch gekennzeichnet, dass** nach vollständiger Kopplung der Rechner (6, 7) an die Vorrichtung, die Adapterplatten (12; 22) der Ankopplungseinheiten (3, 78; 43, 79) zueinander in senkrechter oder paralleler Richtung liegen.

5. Vorrichtung nach einem oder mehreren der Ansprüche 1 bis 4, **dadurch gekennzeichnet, dass** die erste Ankopplungseinheit (3) auf der Vorrichtung feststeht und die zweite Ankopplungseinheit (78) sich in mindestens einer, auf die erste Ankopplungseinheit (3) zu und von dieser weg, linear verschiebbaren Schublade (4, 5) befindet, in der die Aufnahmefächer (38, 39) für die Rechner (6, 7) angeordnet sind.

6. Vorrichtung nach einem oder mehreren der Ansprüche 1 bis 4, **dadurch gekennzeichnet, dass** die zweite Ankopplungseinheit (79) mit den Aufnahmefächern (38, 39) für die Rechner (6, 7) auf der Vorrichtung feststeht und die erste Ankopplungseinheit (43) auf die zweite Ankopplungseinheit (79) zu und von dieser weg um ein Schwenklager (40) herum verschwenkbar ist.

7. Vorrichtung nach einem oder mehreren der Ansprüche 1 bis 4, **dadurch gekennzeichnet, dass** die zweite Ankopplungseinheit (78) auf der Vorrichtung feststeht und die erste Ankopplungseinheit (3) mit den Aufnahmefächern (38, 39) für die Rechner (6, 7) sich in mindestens einer, auf die zweite Ankopplungseinheit (78) zu und von dieser weg, linear verschiebbaren Schublade (4, 5) befindet.

8. Vorrichtung nach einem oder mehreren der Ansprüche 1 bis 7, **dadurch gekennzeichnet, dass** die bewegbare Ankopplungseinheit (78; 43) manuell und/oder mittels motorischem Antrieb antreibbar ist.

9. Vorrichtung nach einem oder mehreren der Ansprüche 1 bis 8, **dadurch gekennzeichnet, dass** die Adapterplatten (12; 22) in mindestens zwei zueinander senkrechte Richtungen justierbar sind.

10. Vorrichtung nach einem oder mehreren der Ansprüche 1 bis 9, **dadurch gekennzeichnet, dass** die Aufnahmefächer (38, 39) nach vertikal oben oder nach vertikal unten zum Boden hin offen sind und somit die Rechner (6, 7) stehend vertikal von oben oder unten in die Aufnahmefächer (38, 39) einbringbar sind.

11. Vorrichtung nach einem oder mehreren der Ansprüche 1 bis 10, **dadurch gekennzeichnet, dass** die Aufnahmefächer (38, 39) horizontal einseitig offen sind und somit die Rechner (6, 7) liegend horizontal in die Aufnahmefächer (38, 39) einbringbar sind.

12. Vorrichtung nach einem oder mehreren der Ansprüche 1 bis 11, **dadurch gekennzeichnet, dass** horizontale und/oder vertikale Zentrierungen für die Rechner (6, 7) in den Aufnahmefächern (38, 39) in Form von breitenverstellbaren Rechen (16, 17) vorhanden sind.

13. Vorrichtung nach einem oder mehreren der Ansprüche 1 bis 12, **dadurch gekennzeichnet, dass** zwei feststehende Ankopplungseinheiten (3; 79) aneinander spiegelsymmetrisch verbunden sind und die zwei spiegelsymmetrisch angeordneten beweglichen Ankopplungseinheiten (43; 78) aufeinander zu und voneinander weg bewegbar sind.

14. Vorrichtung nach einem oder mehreren der Ansprüche 1 bis 13, **dadurch gekennzeichnet, dass** ein zentrales Verriegelungssystem aller Rechner (6, 7) vorhanden ist, welches einen schwenkbaren Verriegelungsrahmen (57, 65) beinhaltet, der mit mehreren Bolzen (61-63) ein oder mehrere teleskopierbare Hauben (44, 45, 48, 51, 52) und/oder Schubladen (56) über bzw. an einer oder mehrerer Trägereinheiten (1) verschließt.

15. Vorrichtung nach einem oder mehreren der Ansprüche 1 bis 14, **dadurch gekennzeichnet, dass** die Trägereinheit (1) auf einem Fahrgestell (50) angeordnet ist.

16. Vorrichtung nach Anspruch 15, **dadurch gekennzeichnet, dass** das Fahrgestell (50) motorisch antreibbar ist.

17. Vorrichtung nach Anspruch 15 oder 16, **dadurch gekennzeichnet, dass** das Fahrgestell (50) treppensteigtauglich ist, welches die Überwindung von Treppen und anderen Höhendifferenzen gestattet.

## Claims

1. Device for coupling computers (6, 7) to a carrier unit (1) with a plurality of receiving compartments (38, 39) for the computers (6, 7), wherein the device contains a first coupling unit (3; 43) with at least a first adapter plate (22) with plug receivers (19) and/or plugs (20), **characterised in that** the device also contains a second coupling unit (78, 79) with at least one adapter plate (12) with plug receivers (14) and/or plugs (13), and at least one of the two coupling units (3, 78; 43, 79) can be moved relative to the other coupling unit (78, 3; 79, 43) in such a way that once the computers (6, 7) have been manually pre-coupled to one of the two coupling units (3, 78; 43, 79), coupling to the other of the two coupling units (78, 3; 79, 43) takes place automatically in such a way that after complete coupling of the computers (6, 7) to the device, the plugging directions of the plug receivers (14; 19) and/or plugs (13; 20) of the coupling units (3, 78; 43, 79) are located in the perpendicular direction with respect to one another.

2. Device according to claim 1, **characterised in that** the first (3, 43) and the second coupling unit (78; 79) effect a mechanical and electrical coupling of the computers (6, 7) to the carrier unit (1) or else one of the coupling units (3, 43; 78, 79) effects a mechanical and electrical coupling and the other coupling unit (78, 79; 3, 43) only effects a mechanical coupling of the computers (6, 7) to the carrier unit (1).

3. Device according to claim 2, **characterised in that**, owing to the device, the computers (6, 7) are connected to one another and/or to a central computer for the exchange of data via at least one of the two coupling units (3, 78; 43, 79).

4. Device according to one or more of claims 1 to 3, **characterised in that** after complete coupling of the computers (6, 7) to the device, the adapter plates (12; 22) of the coupling units (3, 78; 43, 79) are located in a perpendicular or parallel direction with respect to one another.

5. Device according to one or more of claims 1 to 4, **characterised in that** the first coupling unit (3) is fixed on the device and the second coupling unit (78) is located in at least one drawer (4, 5) which is linearly displaceable toward the first coupling unit (3) and away from it, in which drawer the receiving compartments (38, 39) for the computers (6, 7) are arranged.

6. Device according to one or more of claims 1 to 4, **characterised in that** the second coupling unit (79) with the receiving compartments (38, 39) for the computers (6, 7) is fixed on the device and the first coupling unit (43) can be pivoted toward the second coupling unit (79) and away from it about a pivot bearing (40).

7. Device according to one or more of claims 1 to 4, **characterised in that** the second coupling unit (78) is fixed on the device and the first coupling unit (3) with the receiving compartments (38, 39) for the computers (6, 7) is located in at least one drawer (4, 5) which can be linearly displaced toward the second coupling unit (78) and away from it.

8. Device according to one or more of claims 1 to 7, **characterised in that** the movable coupling unit (78; 43) can be driven manually or by means of a motor drive.

9. Device according to one or more of claims 1 to 8, **characterised in that** the adapter plates (12; 22) can be adjusted in at least two directions which are perpendicular with respect to one another.

10. Device according to one or more of claims 1 to 9, **characterised in that** the receiving compartments (38, 39) are open vertically upwardly or vertically downwardly toward the base and therefore the computers (6, 7) can be introduced standing vertically from above or below into the receiving compartments (38, 39).

11. Device according to one of more of claims 1 to 10, **characterised in that** the receiving compartments (38, 39) are open horizontally on one side and therefore the computers (6, 7) can be introduced lying horizontally into the receiving compartments (38, 39).

12. Device according to one or more of claims 1 to 11, **characterised in that** horizontal and/or vertical centring devices for the computers (6, 7) are present in the receiving compartments (38, 39) in the form of width-adjustable racks (16, 17).

13. Device according to one or more of claims 1 to 12, **characterised in that** two fixed coupling units (3; 79) are connected to one another mirror-symmetrically and the two mirror-symmetrically arranged movable coupling units (43; 78) can be moved toward one another and away from one another.

14. Device according to one or more of claims 1 to 13, **characterised in that** a central locking system for all the computers (6, 7) is present, which contains a pivotable locking frame (57, 65), which, with a plurality of bolts (61 to 63), locks one or more telescoping covers (44, 45, 48, 51, 52) and/or drawers (56) above or on one or more carrier units (1).

15. Device according to one or more of claims 1 to 14, **characterised in that** the carrier unit (1) is arranged on a chassis (50).

16. Device according to claim 15, **characterised in that** the chassis (50) can be motor-driven.

17. Device according to claim 15 or 16, **characterised in that** the chassis (50) is suitable for climbing steps and allows steps and other height differences to be overcome.

## Revendications

1. Dispositif pour coupler des ordinateurs (6, 7) à une unité de support (1) comportant plusieurs compartiments (38, 39) pour les ordinateurs (6, 7), ce dispositif contenant une première unité de couplage (3 ; 43) avec au moins une plaque adaptatrice (22) pourvue d'alvéoles (19) et/ou de fiches (20), **caractérisé en ce que** le dispositif contient en supplément une seconde unité de couplage (78 ; 79) avec au moins une plaque adaptatrice (12) pourvue d'alvéoles (14) et/ou de fiches (13), et l'une au moins des deux unités de couplage (3, 78 ; 43, 79) est mobile par rapport à l'autre unité de couplage (78, 3 ; 79, 43) de sorte qu'après un couplage manuel des ordinateurs (6, 7) à l'une des deux unités de couplage (3, 78 ; 43, 79), le couplage à l'autre unité de couplage (78, 3 ; 79, 43) se fasse automatiquement pour qu'après le couplage complet des ordinateurs (6, 7) au dispositif, les sens d'enfichage des alvéoles (14 ; 19) et/ou des fiches,(13 ; 20) des unités de couplage (3, 78 ; 43, 79) soient perpendiculaires l'un par rapport à l'autre.

2. Dispositif selon la revendication 1, **caractérisé en ce que** les première (3 ; 43) et seconde (78 ; 79) unités de couplage provoquent un couplage mécanique et électrique des ordinateurs (6, 7) à l'unité de support (1), ou l'une des unités de couplage (3, 43 ; 78, 79) provoque un couplage mécanique et électrique tandis que l'autre unité de couplage (78, 79 ; 3, 43) ne provoque qu'un couplage mécanique des ordinateurs (6, 7) à l'unité de support (1).

3. Dispositif selon la revendication 2, **caractérisé en ce que** grâce au dispositif, les ordinateurs (6, 7) sont reliés entre eux et/ou à un ordinateur central en vue d'un échange de données, par l'intermédiaire de l'une des deux unités de couplage (3, 78 ; 43, 79).

4. Dispositif selon l'une au moins des revendications 1 à 3, **caractérisé en ce qu'**après le couplage complet des ordinateurs (6, 7) au dispositif, les plaques adaptatrices (12 ; 22) des unités de couplage (3, 78 ; 43, 79) sont perpendiculaires ou parallèles.

5. Dispositif selon l'une au moins des revendications 1 à 4, **caractérisé en ce que** la première unité de couplage (3) est fixe sur le dispositif, et la seconde unité de couplage (78) se trouve dans au moins un tiroir (4, 5), mobile linéairement pour se rapprocher et s'éloigner de la première unité de couplage (3), dans lequel sont disposés les compartiments (38, 39) pour les ordinateurs (6, 7).

6. Dispositif selon l'une au moins des revendications 1 à 4, **caractérisé en ce que** la seconde unité de couplage (79) avec les compartiments (38, 39) pour les ordinateurs (6, 7) est fixe sur le dispositif, et la première unité de couplage (43) est apte à pivoter sur un palier de pivotement (40) pour se rapprocher et s'éloigner de la seconde unité de couplage (79).

7. Dispositif selon l'une au moins des revendications 1 à 4, **caractérisé en ce que** la seconde unité de couplage (78) est fixe sur le dispositif, et la première unité de couplage (3) avec les compartiments (38, 39) pour les ordinateurs (6, 7) se trouve dans au moins un tiroir qui est mobile linéairement pour se rapprocher et s'éloigner de la seconde unité de couplage (78).

8. Dispositif selon l'une au moins des revendications 1 à 7, **caractérisé en ce que** l'unité de couplage mobile (78 ; 43) est apte à être entraînée manuellement et/ou à l'aide d'un entraînement à moteur.

9. Dispositif selon l'une au moins des revendications 1 à 8, **caractérisé en ce que** les plaques adaptatrices (12 ; 22) sont ajustables dans au moins deux directions perpendiculaires.

10. Dispositif selon l'une au moins des revendications 1 à 9, **caractérisé en ce que** les compartiments (38, 39) sont ouverts vers le haut ou vers le bas en direction du sol, à la verticale, et les ordinateurs (6, 7) peuvent ainsi être introduits debout, à la verticale par le haut ou par le bas, dans les compartiments (38, 39).

11. Dispositif selon l'une au moins des revendications 1 à 10, **caractérisé en ce que** les compartiments (38, 39) sont ouverts sur un côté à l'horizontale et les ordinateurs (6, 7) peuvent ainsi être introduits couchés à l'horizontale dans les compartiments (38, 39).

12. Dispositif selon l'une au moins des revendications 1 à 11, **caractérisé en ce qu'**il est prévu des centrages horizontaux et/ou verticaux pour les ordinateurs (6, 7) dans les compartiments (38, 39), sous la forme de râteliers (16, 17) réglables en largeur.

13. Dispositif selon l'une au moins des revendications 1 à 12, **caractérisé en ce que** deux unités de couplage fixes (3 ; 79) sont reliées en miroir et les deux unités de couplage mobiles (43 ; 78) disposées en miroir sont aptes à être rapprochées et éloignées l'une de l'autre.

14. Dispositif selon l'une au moins des revendications 1 à 13, **caractérisé en ce qu'**il est prévu un système de verrouillage centralisé de tous les ordinateurs (6, 7), qui contient un cadre de verrouillage pivotant (57, 65) qui ferme à l'aide de plusieurs tiges (61-63) un ou plusieurs capots télescopiques (44, 45, 48, 51, 52) et/ou tiroirs (56) sur une ou plusieurs unités de support (1).

15. Dispositif selon l'une au moins des revendications 1 à 14, **caractérisé en ce que** l'unité de support (1) est disposée sur un châssis roulant (50).

16. Dispositif selon la revendication 15, **caractérisé en ce que** le châssis roulant (50) est apte à être entraîné à l'aide d'un moteur.

17. Dispositif selon la revendication 15 ou 16, **caractérisé en ce que** le châssis roulant (50) est apte à monter les escaliers, ce qui permet de franchir des escaliers et autres dénivelés.
